# EUROPEAN PATENT APPLICATION

(11) **EP 2 381 103 A1**
(43) Date of publication of application: **26.10.2011**
(21) Application number: 10160456.9
(22) Date of filing: 20.04.2010
(51) Int. Cl.: F03D 11/04, E04H 4/08

(54) **Tower section closure**

(71) Applicant: Fiberline Composites A/S, 5500 Middelfart (DK)
(72) Inventor: The designation of the inventor has not yet been filed
(74) Representative: Nielsen, Henrik Sten

(57) **Abstract**

A closure for closing off a circular end opening of a tower section of a windmill tower or a similar tower. The tower section comprises a cylindrical or frusto-conical wall and an annular flange positioned at the circular end opening. The annular flange defines an inner diameter and the circular end opening defines an outer diameter. The closure defines a substantially circular configuration which defines a minimum transversal dimension larger than the inner diameter and substantially corresponds to the outer diameter. The closure is composed of a plurality of self-supporting plate sections which are pivotally connected to allow the closure to be converted from an unfolded state which defines the circular configuration into a folded state, and the closure comprises a number of fasteners for connecting the closure to the annular flange.

## Description

The present invention relates to a closure for an open end of a tower section of a windmill tower Moreover, the present invention relates to a method of handling a tower section involving such a closure

During the storing and transporting of tower sections, they are commonly subjected to weather conditions that may affect, or even damage, the tower sections Typically, the inside of a tower section is less protected from the weather than the outside, e g. the inside may not have been treated for corrosion resistance while the outside has. Thus, it is important to cover the open ends of the tower section It is known to cover the open ends by tarpaulins However, these are rather sensitive to strong wind, in particular due to the common lack of a feature on the tower section to which the tarpaulins can be connected and secured It is also rather hard to attach a tarpaulin-like cover to a tower section, in particular under windy conditions, as a tower section typically has a diameter that exceeds the typical length of a the person mounting the tarpaulin by at least a factor two

It is an object of the present invention to improve the handling, including the storing and transport of tower sections for a windmill tower A particular feature of the present invention is a closure comprising a plurality of pivotally connected self-supporting plate sections This has the effect that the closure may be folded together, even though it is a rigid structure when secured to a tower section One of the advantages of being able to fold the closure together is that it may be transported as ordinary shipment on a road, even though the diameter of the tower section exceeds the maximum allowed width of shipment.

Additional objects, technical effects, and advantages of the present invention will be evident from the specifications below According to a first aspect of the present invention, the objects are met by a closure for closing off a circular end opening of a tower section of a windmill tower or a similar tower, the tower section comprising a cylindrical or frusto-conical wall and an annular flange positioned at the circular end opening, the annular flange defining an inner diameter and the circular end opening defining an outer diameter, the closure defining a substantially circular configuration defining a minimum transversal dimension larger than the inner diameter and substantially corresponding to the outer diameter, the closure being composed of a plurality of self-supporting plate sections being pivotally connected for allowing the closure to be converted from an unfolded state defining the circular configuration into a folded state, and the closure comprising a number of fasteners for connecting the closure to the annular flange. This allows for a strong and durable closure that can withstand harsh weather conditions, and be connected to or removed from the tower section under such conditions The number of fasteners, which may be one or more, allows for the closure to be connected directly to the tower section, without first mounting any element on the tower section for connecting the closure to. The self-supporting plate sections allow for an easier connection to the tower section than if they were a tarpaulin

A self-supporting plate section of the plurality of self-supporting plate sections may have a dimension in the direction of maximum extension larger than the inner diameter This has the effect that it allows for a more rigid construction of the closure, which has the advantage that a person may walk upon the closure when it is connected to the annular flange and covering the circular opening, e.g. for connecting lift wires to lift elements attached to the annular flange

The minimum transversal dimension may be in one or more of the ranges of approximately 2,5 metres to approximately 10 metres, approximately 3.0 metres to approximately 7.0 metres, approximately 4.5 metres to approximately 6.0 metres, approximately 5 metres, approximately 2 5 metres to approximately 3 5 metres, approximately 3 5 metres to approximately 4.5 metres, approximately 4.5 metres to approximately 5.5 metres, approximately 5.5 metres to approximately 6.5 metres, approximately 7 5 metres to approximately 8.5 metres, and approximately 8.5 metres to approximately 10 metres.

The closure in the folded state may define a maximum dimension in the direction of minimum extension smaller than 24 metres. This has the effect that it can be readily loaded onto a common load bed of a common trailer, which has the advantage that the closure may be transported as a common shipment on a common road. The plurality of self-supporting plate sections may comprise three or more plate sections pivotally connected along parallel pivot axes. This allows for the closure in its folded state to occupy less space than if folded along non-parallel pivot axes One of the advantage with this feature is that a larger closure can be handled by the same machines, e.g. transport vehicles.

Each of the plurality of self-supporting plate sections may define a first planar surface portion and comprise a plurality of elongated support elements connected to and protruding from its first planar surface portion, the plurality of support elements may be oriented parallel to each other and to the first planar surface portion This allows for the closure to plate sections to be thinner without any reduction in the structural strength or change of material, which has the advantage that the weight of the closure can be reduced Each support element of the plurality of support elements may have a T-profile. Further, a support element of the plurality of support elements and a self-supporting plate sections of the plurality of self-supporting plate sections may be integrally formed and manufactured of a fibre-reinforced plastic.. These features will work to minimize the weight of the closure with maintained structural strength of the plate sections

The number of fasteners may be adapted for cooperating with the plurality of support elements This has the advantage of a simple technical realisation in connecting the closure to the annular flange. Further, it allows for a more flexible connecting in that the fastener may engage the support element along its complete length

A self-supporting plate section of the plurality of self-supporting plate sections may define a cut-out for a lift element connected to the annular flange, the closure further comprising a compliant cover for covering the cut-out and the lift element This has the effect that lift elements may be mounted on the annular flange, and that a lift element that is mounted on the annular flange may be engaged in a lifting, even though the closure is connected to the annular flange and closing off the circular en opening of the tower section Examples of materials the compliant cover may be manufactured of is a waterproof fabric or a flexible sheet of plastic. The compliant cover may be releasably attached to the self-supporting plate sections defining the cut-out This allows for the compliant cover to be completely removed prior to engaging the lift elements, which has the advantage that they may be used without breaking them for accessing the lift element

According to a second aspect of the present invention, the objects are met by a closure for closing off a circular end opening of a tower section of a windmill tower or a similar tower, the tower section comprising a cylindrical or frusto-conical wall and an annular flange positioned at the circular end opening, the annular flange defining an inner diameter and the circular end opening defining an outer diameter, the closure being composed of a plurality of self-supporting plate sections being pivotally connected for allowing the closure to be converted from an unfolded state into a folded state, and the closure comprising a number of fasteners for connecting the closure to the annular flange The closure may define a substantially circular configuration in the unfolded state The substantially circular configuration may define a minimum transversal dimension larger than the inner diameter. The substantially circular configuration may define a minimum transversal dimension substantially corresponding to the outer diameter The closure according to the second aspect of the present invention may comprise any feature or combination of features of the first aspect of the present invention

According to a third aspect of the present invention, the objects are met by a method of handling a tower section of a windmill tower or a similar tower, the tower section having a circular end opening and comprising a cylindrical or frusto-conical wall and an annular flange positioned at the circular end opening, the annular flange defining an inner diameter and the circular end opening defining an outer diameter, the method comprising the steps of: providing the tower section at a first location, providing a closure according to the first or second aspect of the present invention in its folded state at the first location, unfolding the closure from its folded state into its unfolded state, and connecting the closure to the annular flange at the first location by the number of fasteners

The method according to the second aspect of the present invention may further comprise the steps of transporting the tower with the closure connected to the annular flange from the first location to a second location, disconnecting the closure from the annular flange at the second location, and folding the closure from its unfolded state to its folded state. For example, the transporting may be over land, e.g. by a special tower section trailer transport, or over sea, e g by a ship

The method according to the third aspect of the present invention may further comprise the steps of: providing a transport vehicle at the second location for transporting the closure, loading the closure in its folded state onto the transport vehicle, and transporting the closure from the second location to the first location or to a third location For example, the transport vehicle may include a truck fitted with a trailer for road transport, a barge, or a ship

### BRIEF DESCRIPTION OF THE DRAWINGS

The above-mentioned objects and features and additional objects and features according to the present invention, will be further elaborated upon in the following detailed description and appended claims in conjunction with the figures.
FIG. 1A illustrates an exploded perspective top view of the preferred embodiment of the closure according to the present invention in its unfolded state and in a positioning relative to an upright tower section prior to connecting thereto,
FIG. 1B illustrates a perspective top view of the closure illustrated in FIG 1A connected to the upright tower section,
F1G. 2 illustrates a perspective top view of the preferred embodiment of the closure according to the present invention connected to a tower section lying down,
FIG. 3A illustrates a perspective and partly cut-out top view of the preferred embodiment of the closure according to the present invention connected to an upright tower section,
FIG. 3B illustrates a magnified perspective view of the cut-out view in FIG 3A,
FIG 4A illustrates a perspective top view of the preferred embodiment of the closure according to the present invention being folded together from its unfolded state, and
FIG 4B illustrates a perspective top view of the preferred embodiment of the closure according to the present invention in its folded state and placed on a transport vehicle

### DETAILED DESCRIPTION

The same number indexing is used for identical or similar elements or features in all of the figures

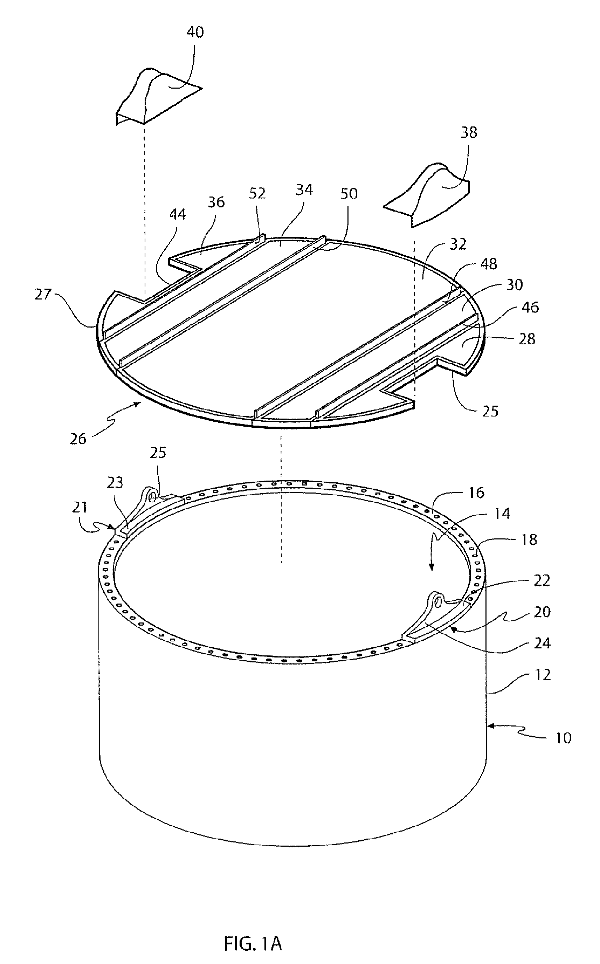

FIG. 1A illustrates a tower section 10 comprising a frusto-conical wall 12 and having a circular end opening 14 An annular flange 16 is connected to the frusto-conical wall 12 at the circular end opening 14 The annular flange 16 has a plurality of regularly spaced bolt holes 18 for interconnecting with a similar flange with bolt holes on another tower section. Lift elements 20, 21 are attached to the annular flange 16 at opposite sides of the circular end opening 14 The lift elements have a base 22, 23 bolted to the flange via a number of the bolt holes 18, and a portion 24, 25 protruding from the base 22, 23 in a direction away from the annular flange 16 and the tower section 10 The protruding portions 24, 25 each have an eyelet, by which the whole tower section can be lifted and balanced so that the symmetry axis of the frusto-conical wall 12 is vertical.

FIG 1A further illustrates an exploded perspective top view of the preferred embodiment of the closure 26 according to the present invention The closure 26 comprises five self-supporting plate sections 28-36 pivotally Adjacent plate sections 28-36 are pivotally connected with each other by elongated flexible pivot joint 46-52 The flexible pivot joints 46-52 are parallel and extend across the closure 26 The five self-supporting plate sections 28-36 are flat and have parallel planar side faces, one inner face for facing the end opening 14 of a tower section 10 for a windmill tower, and one outer face for facing away from the tower section 10 The two peripheral plate sections 28, 36 have cut-outs 42, 44 at the edge 27 of the closure 26. Each of the cut-outs 42, 44 is covered by a compliant cover 38, 40 of a flexible fabric The compliant covers 38, 40 are attached to the peripheral plate sections 28, 36 and can be made to protrude from the outer face of the peripheral plate sections 28, 36, or be folded or inverted to be in the plane of the outer face of the peripheral plate sections 28, 36, or protrude from the inner face of the peripheral plate sections 28, 36 towards the tower section 10_{.} When the closure is positioned over the end opening 14 as illustrated in FIG. 1A and lowered onto the opening, the protruding portions 24, 25 of the lift elements 21, 22 extend through the cut-outs 42, 44 and are housed within the compliant covers 38, 40.

The annular flange 16 defines an inner diameter and the closure 10 defines a minimum transversal dimension larger than the inner diameter in the unfolded state shown in FIG. 1A Further, the central self-supporting plate section 32 has a dimension in the direction of maximum extension that is larger than the inner diameter

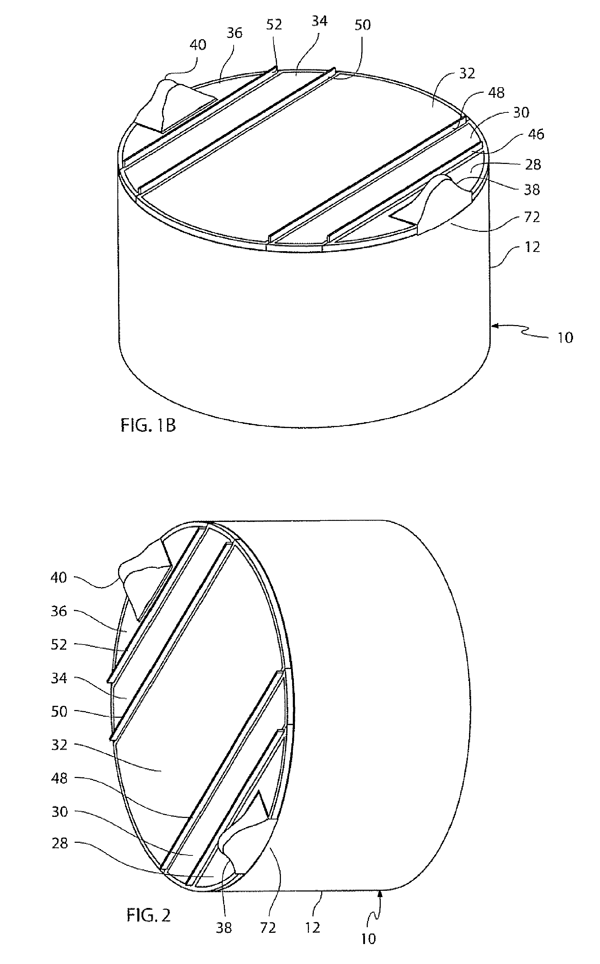

In FIG 1B the closure 26 has been attached to the tower section 10 The protruding portions 24, 25 shown in FIG. 1A are now located within and covered by the compliant covers 38, 40. The compliant covers 38, 40 have an extension 72 provided with magnets that attach to and seal the compliant covers 38, 40 to the base 22, 23 of the lift elements 20, 21. Further, the compliant covers 38, 40 are releasably attached to the peripheral plate sections 28, 36 by magnets.

In FIG. 1B the tower section 10 is positioned upright The closure 26 is resting on the annular flange 16 shown in FIG 1A without being attached thereto and without being deformed In FIG. 2 the tower section 20 is positioned on its side lying down The closure 26 is attached to the annular flange 16 shown in FIG 1A and thereby supported so that it does not fold together.

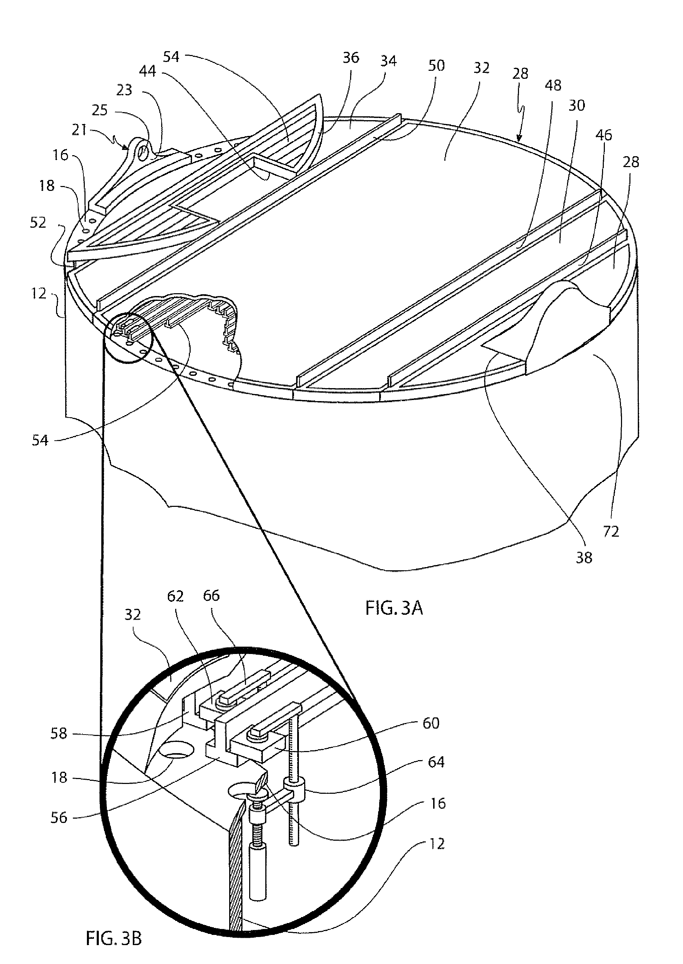

In FIG. 3A a the same perspective top-view as in FIG 1B is illustrated, but with the closure 26 attached and secured to the annular flange 16. The securing made on the inner sides of the self-supporting plate sections 28-36 is shown in the cut-out view, of which a portion is enlarged in FIG 3B One of the peripheral plate sections 36 is folded towards its neighbouring plate section 34 by the interconnecting elongated flexible pivot joint 52 A plurality of elongated and equidistant support elements 54 is connected to the planar inner sides or surfaces of the self-supporting plate sections 28-36 and running parallel with each other and with the four elongated flexible pivot joint 46-52 Some of the elongated support elements 54 are visible on the back-folded peripheral plate section 36, others are visible in the cut out view All of the support elements 54 have a T-profile, which is shown in the magnified view of FIG 3B, where two neighbouring elongated support elements 56, 58 are shows. Both of the support elements 56, 58 rest on the annular flange 16 Blocks 60, 62 rests on the inside of the neighbouring T-profile and above the annular flange 16. Clamps 64, 66 attach the elongated support elements 56, 58, and thereby the self-supporting plate section 32, to the annular flange 16 The other plate sections 28, 30, 34, 36 are similarly attached to the annular flange

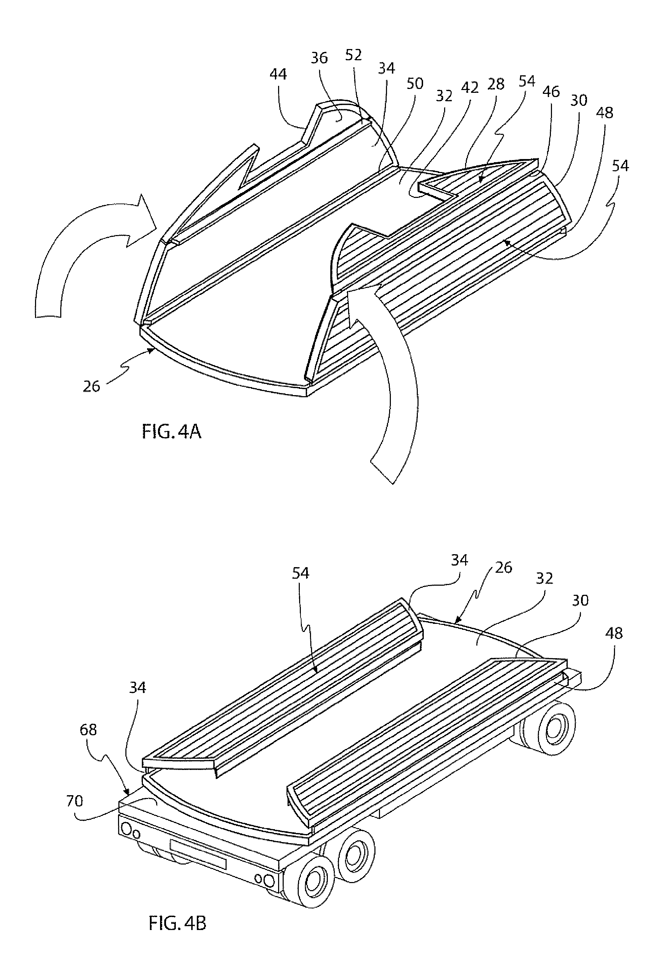

In FIG. 4A a perspective top view of the closure 10 is illustrated when the closure 10 is folded together from its unfolded state. The releasably attached compliant covers 38, 40 depicted in FIG. 1B-3B have been removed, but may be used repeatedly. The peripheral plate sections 28, 36 are folded towards the neighbouring plate sections 30, 34 to define a first pair of folded plate sections 28, 30 and a second pair of folded plate sections 34, 36. The folded pair plate sections 28, 30, 34, 36, are subsequently folded toward the centrally placed plate section 32. The folding of the closure 26 as depicted in FIG. 4A is performed in a horizontal position. However, it is also possible to perform the same folding for an upright closure, e g with the elongated flexible pivot joints 46, 48 oriented vertically

FIG 4B illustrates a perspective top view of the closure, 10 in the previous figure in its fully folded state and placed on a transport vehicle 68 The inner side of the centrally placed plate section 32 is placed in facial contact with the load bed 70 of the transport vehicle 68

### ITEM LIST

- 10: tower section
- 12: cylindrical wall
- 14: circular end opening
- 16: annular flange
- 18: bolt-holes
- 20: lift element
- 21: lift element
- 22: base
- 23: base
- 24: protruding portion
- 25: protruding portion
- 26: closure
- 27: edge of closure
- 28: self-supporting plate section
- 30: self-supporting plate section
- 32: self-supporting plate section
- 34: self-supporting plate section
- 36: self-supporting plate section
- 38: compliant cover
- 40: compliant cover
- 42: cut-out
- 44: cut-out
- 46: elongated flexible pivot joint
- 48: elongated flexible pivot joint
- 50: elongated flexible pivot joint
- 52: elongated flexible pivot joint
- 54: plurality of elongated T-profiled support elements
- 56: elongated T-prafiled support elements
- 58: elongated T-profiled support elements
- 60: block
- 62: block
- 64: clamp
- 66: clamp
- 68: transport vehicle
- 70: load bed
- 72: extension

## Claims

1. A closure for closing off a circular end opening of a tower section of a windmill tower or a similar tower, said tower section comprising a cylindrical or frusto-conical wall and an annular flange positioned at said circular end opening, said annular flange defining an inner diameter and said circular end opening defining an outer diameter, said closure defining a substantially circular configuration defining a minimum transversal dimension larger than said inner diameter and substantially corresponding to said outer diameter, said closure being composed of a plurality of self-supporting plate sections being pivotally connected for allowing said closure to be converted from an unfolded state defining said circular configuration into a folded state, and said closure comprising a number of fasteners for connecting said closure to said annular flange

2. The closure according to claim 2, **characterised by** a self-supporting plate section of said plurality of self-supporting plate sections having a dimension in the direction of maximum extension larger than said inner diameter.

3. The closure according to any of the claims 1-2, **characterised by** said minimum transversal dimension being in one or more of the ranges of approximately 2.5 metres to approximately 10 metres, approximately 3.0 metres to approximately 7.0 metres, approximately 4.5 metres to approximately 6.0 metres, approximately 5 metres, approximately 2.5 metres to approximately 3.5 metres, approximately 3.5 metres to approximately 4.5 metres, approximately 45 metres to approximately 5.5 metres, approximately 5.5 metres to approximately 6 5 metres, approximately 7.5 metres to approximately 8 5 metres, and approximately 8.5 metres to approximately 10 metres

4. The closure, according to any of the claims 1-3, **characterised by** said closure in said folded state defining a maximum dimension in the direction of minimum extension smaller than 2.4 metres

5. The closure according to any of the claims 1-4, **characterised by** said plurality of self-supporting plate sections comprising three or more plate sections pivotally connected along parallel pivot axes.

6. The closure according to any of the claims 1-5, **characterised by** each of said plurality of self-supporting plate sections defining a first planar surface portion and comprising a plurality of elongated support elements connected to and protruding from its first planar surface portion, said plurality of support elements being oriented parallel to each other and to said first planar surface portion

7. The closure according to claim 6, **characterised by** each support element of said plurality of support elements having a T-profile

8. The closure according to any of the claims 6-7, **characterised by** a support element of said plurality of support elements and a self-supporting plate section of said plurality of self-supporting plate sections being integrally formed and manufactured of a fibre-reinforced plastic

9. The closure according to any of the claims 6-8, **characterised by** said number of fasteners being adapted for cooperating with said plurality of support elements.

10. The closure according to any of the claim 1-9, **characterised by** a self-supporting plate section of said plurality of self-supporting plate sections defines a cut-out for a lift element connected to said annular flange, said closure further comprising a compliant cover for covering said cut-out and said lift element

11. The closure according to claim 10, **characterised by** said compliant cover being releasably attached to said self-supporting plate sections defining said cut-out

12. A method of handling a tower section of a windmill tower or a similar tower, said tower section having a circular end opening and comprising a cylindrical or frusto-conical wall and an annular flange positioned at said circular end opening, said annular flange defining an inner diameter and said circular end opening defining an outer diameter, said method comprising the steps of:
providing said tower section at a first location,
providing a closure according to any of the claims 1 to 1 in its folded state at said first location,
unfolding said closure from its folded state into its unfolded state, and
connecting said closure to said annular flange at said first location by said number of fasteners

13. The method according to claim 12, **characterised by** further comprising the steps of:
transporting said tower with said closure connected to said annular flange from said first location to a second location,
disconnecting said closure from said annular flange at said second location, and
folding said closure from its unfolded state to its folded state

14. The method according to claim 13, **characterised by** further comprising the steps of:
providing a transport vehicle at said second location for transporting said closure,
loading said closure in its folded state onto said transport vehicle, and
transporting said closure from said second location to said first location or to a third location
